**Europäisches Patentamt**

**European Patent Office**

**Office européen des brevets**

(11) Veröffentlichungsnummer: **0 418 490 A2**

## (12) EUROPÄISCHE PATENTANMELDUNG

(21) Anmeldenummer: 90113576.4

(51) Int. Cl.⁵: **G01L 1/04**

(22) Anmeldetag: 16.07.90

(30) Priorität: 16.09.89 DE 3931021

(43) Veröffentlichungstag der Anmeldung:
27.03.91 Patentblatt 91/13

(84) Benannte Vertragsstaaten:
CH FR GB IT LI SE

(71) Anmelder: **Hommelwerke GmbH**
**Alte Tuttlinger Strasse 20**
**W-7730 VS-Schwenningen(DE)**

(72) Erfinder: **Ulbers, Gerd Dr.**
**Lindenbaumstrasse 10**
**W-7730 VS-Weilersbach(DE)**

(74) Vertreter: **Leine, Sigurd, Dipl.-Ing. et al**
**LEINE & KÖNIG Patentanwälte**
**Burckhardtstrasse 1**
**W-3000 Hannover 1(DE)**

(54) **Kraftmesser.**

(57) Kraftmesser, mit einem durch eine Kraft elastisch deformierbaren Körper und mit Mitteln zur Messung des durch die Deformation beeinflußten Abstandes zwischen einem Ort des Körpers und einem im Abstand dazu befindlichen weiteren Ort, insbesondere des Körpers, **dadurch gekennzeichnet**, daß die Mittel zur Messung des Abstandes der beiden Orte ein Interferometer (4) aufweisen, das an einem der beiden Orte angeordnet ist, und daß ein das Licht des Interferometers (4) in sich selbst zurückwerfender Retroreflektor an dem anderen der beiden Orte angeordnet ist. Durch die Verwendung des Interferometers ergibt sich eine wesentlich größere Meßgenauigkeit, da die zur Kraftmessung ausgenutzte Wegmessung bis in die Größenordnung von Bruchteilen der Wellenlänge des in dem Interferometer benutzten Lichts genau erfolgen kann.

FIG. 3

## KRAFTMESSER

Die Erfindung betrifft einen Kraftmesser, der im Oberbegriff des Anspruchs 1 genannten Art.

Kraftmesser der betreffenden Art sind allgemein bekannt und im Gebrauch. Sie weisen einen deformierbaren Körper und Mittel zur Messung des durch die Deformation beeinflußten Abstandes zwischen einem Ort des Körpers und einem im Abstand dazu befindlichen weiteren Ort auf. Die Mittel zur Messung bestehen aus Dehnungsmeßstreifen, die einen im Abstand von der Längenänderung sich ändernden Widerstand haben. Auch sind induktive Mittel bekannt. Mechanische Mittel zur Abstandsmessung sind z.B. bei Waagen bekannt, jedoch haben sie nur eine vergleichsweise geringe Genauigkeit.

Der Erfindung liegt die Aufgabe zugrunde, einen Kraftmesser der betreffenden Art zu schaffen, der eine erhöhte Genauigkeit und einen größeren Meßbereich hat und gleichzeitig einfach und billig im Aufbau ist.

Diese Aufgabe wird durch die im Kennzeichen des Anspruchs 1 angegebene Lehre gelöst. Danach weisen die Mittel zur Messung des Abstandes der beiden Orte ein Interferometer auf, das an einem der beiden Orte angeordnet ist, während ein das Licht des Interferometers in sich selbst reflektierender Retroreflektor an dem anderen der beiden Orte angeordnet ist. Durch die Verwendung des Interferometers ergibt sich eine wesentlich größere Meßgenauigkeit als bei bisher bekannten Einrichtungen, da die zur Kraftmessung ausgenutzte Wegmessung bis in die Größenordnung von Bruchteilen der Wellenlänge des in dem Interferometer benutzten Lichts genau erfolgen kann.

Der Retroreflektor kann sehr klein und leicht sein. Er hat zweckmäßigerweise beispielsweise die Form einer kleinen Kugel, die das Gewicht des deformierbaren Körpers praktisch nicht beeinflußt. Aus diesem Grunde können auch mechanische Schwingungen mit hoher Genauigkeit aufgenommen und gemessen werden.

Die zu messende Kraft kann auch von einem Druck erzeugt sein. Dazu ist gemäß einer Weiterbildung der Neuerung der deformierbare Körper eine von dem Druck beaufschlagte Membran, an der der Retroreflektor angebracht ist. Zur Druckmessung kann der deformierbare Körper auch ein einseitig beispielsweise durch eine Platte geschlossener Balg sein, der von dem zu messenden Druck beaufschlagt ist. An dem geschlossenen Ende des Balges ist dann der Retroreflektor angeordnet. Zweckmäßigerweise ist dabei der Balg in einem zylindrischen Raum geführt. Membran und Balg können in einem im wesentlichen rohrförmigen Körper angeordnet sein, wodurch sich eine sehr kleine und gut handzuhabende Druckmeßkapsel ergibt.

Der deformierbare Körper kann auch die Form einer hohlen, vorzugsweise zylindrischen Druckdose haben, die aus einer umlaufenden Seitenwand und sich gegenüberliegenden Deck- und Bodenplatten besteht, an denen der Retroreflektor einerseits und das Interferometer andererseits entfernt von der Wandung angeordnet sind. Deck- und/oder Bodenplatte deformieren sich bei Druckbeaufschlagung, wodurch sich ihr Abstand ändert, der von dem Interferometer im Zusammenspiel mit dem Retroreflektor gemessen wird.

Nach einer anderen Ausführungsform der Erfindung besteht der deformierbare Körper im wesentlichen aus einem U-förmigen Körper, an dessen Schenkel der Retroreflektor einerseits und das Interferometer andererseits angeordnet sind, so daß bei Kraftbeaufschlagung der beiden Schenkel deren Bewegung zueinander durch das Interferometer gemessen wird.

Zweckmäßigerweise ist dabei der U-förmige, deformierbare Körper in einem vorzugsweise dosenförmigen Gehäuse angeordnet. Einer der Schenkel des U-förmigen Körpers weist auf der dem anderen Schenkel abgewandten Seite einen Stempel auf, der durch das Gehäuse nach außen ragt. Er kann dann mit der zu messenden Kraft beaufschlagt werden.

Der deformierbare Körper kann auch ein durch die zu messende Kraft in Längsrichtung beaufschlagter Stab sein, an dem seitlich der Retroreflektor angeordnet ist. Das Interferometer ist dann in bezug zu dem Stab seitlich angeordnet und strahlt in bezug zu dem Stab senkrecht auf den Retroreflektor. Auf diese Weise wird die Querschnittsänderung des Stabes bei Druckbeaufschlagung in Längsrichtung festgestellt und so die Kraftbeaufschlagung gemessen.

Eine andere zweckmäßige Weiterbildung der Erfindung besteht darin, daß der deformierbare Körper ein Torsionsstab ist, mit dessen einen Ende das Interferometer verbunden und an dem in Längsrichtung des Torsionsstabes entfernt von dem Interferometer der Retroreflektor angeordnet ist. Der Retroreflektor ist eine Kugel, deren Durchmesser größer als der Durchmesser des in allen Torsionslagen auf die Kugel auftreffenden Lichtstrahls aus dem Interferometer ist. Wird der Torsionsstab tordiert, so ändert sich der optische Weg zwischen Retroreflektor und Interferometer, der dann gemessen wird.

Anhand der Zeichnung soll die Erfindung an Ausführungsbeispielen näher erläutert werden.

Fig. 1 zeigt im Schnitt einen Druckaufnehmer gemäß der Erfindung,

Fig. 2 zeigt im Schnitt eine Abwandlung des Ausführungsbeispiels gemäß Fig. 1,

Fig. 3 zeigt im Schnitt einen dosenförmigen Kraftaufnehmer,

Fig. 4 zeigt einen bügelförmigen Kraftaufnehmer im Schnitt,

Fig. 5 zeigt einen stabförmigen Kraftaufnehmer im Schnitt und

Fig. 6 zeigt einen Kraftaufnehmer zur Drehmomentenmessung.

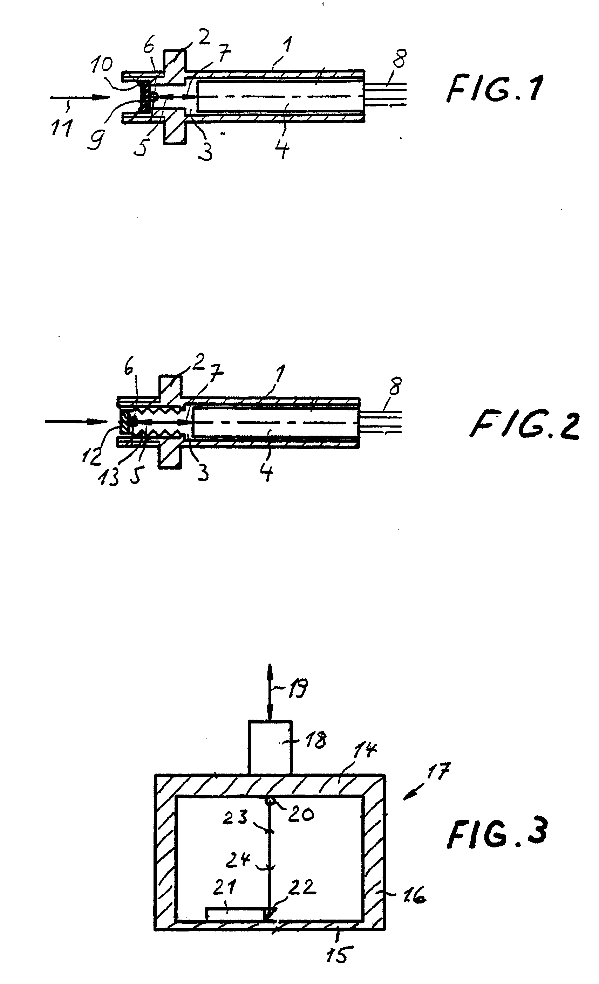

Fig. 1 zeigt einen rohrförmigen Körper 1 mit einem Flansch 2, der zur Anbringung des Körpers 1 in der Öffnung eines Druckraumes dient. Im Inneren des rohrförmigen Körpers ist ein Hohlraum 3 gebildet, in dem sich ein nur schematisch angedeutetes Interferometer 4 befindet, dessen Licht in Richtung eines Pfeiles 5 auf einem als Kugel 6 ausgebildeten Retroreflektor gerichtet ist und von diesem in Richtung eines Pfeiles 7 in das Interferometer 4 zurückkehrt, wo der Abstand zwischen dem Interferometer und der Kugel 6 in bekannter Weise abgetastet und über Leitungen 8 in nicht dargestellten Meß- und/oder Anzeigeeinrichtungen übertragen wird.

Die Kugel 6 befindet sich im Zentrum einer Membran 9, die mit ihren Rändern dicht in den Hohlraum 3 eingesetzt und mittels Dichtungen 10 abgedichtet und/oder verklebt ist.

Wird die Membran 9 durch einen durch einen Pfeil 11 angedeuteten Druck beaufschlagt, so verformt sie sich entsprechend, so daß sich auch die Kugel 6 entsprechend bewegt und der Abstand zwischen der Kugel 6 und dem Interferometer 4 sich ändert. Diese Änderung ist dann ein Maß für die Druckbeaufschlagung.

Fig. 2 zeigt eine Abwandlung des Ausführungsbeispiels gemäß Fig. 1. Gleiche oder sich entsprechende Teile sind durch gleiche Bezugsziffern bezeichnet. Der Unterschied besteht darin, daß statt der Membran 9 eine Platte 12 vorgesehen ist, die dicht mit einem Balg 13 verbunden ist, der mit seinem der Platte 12 abgewandten Ende dicht mit der Innenwandung des rohrförmigen Körpers 1 verbunden ist. Die Platte 12 wie auch der Balg 13 sind gegen seitliche Auslenkungen durch die Innenwandung des rohrförmigen Körpers 1 geführt. Durch den Balg 13 ergibt sich eine größere Nachgiebigkeit des Systems, so daß geringe Drücke mit hoher Genauigkeit meßbar sind.

Bei dem Ausführungsbeispiel gemäß Fig. 3 bilden eine Deckplatte 14 und eine Bodenplatte 15 zusammen mit einer umlaufenden, zylindrischen Seitenwand 16 eine Druckdose 17. Diese wird im Zentrum der Deckplatte 14 über einen dort angebrachten Stempel 18 mit einer durch einen Pfeil 19 zu messenden Kraft beauftragt, so daß eine Deformation erfolgt, die zu einer Änderung des Abstandes zwischen dem Zentrum der Deckplatte 14 und der Bodenplatte 15 führt. Zur Messung dieses Abstandes bzw. der Änderung desselben ist im Inneren der Druckdose 17 an der Deckplatte 14 in dessen Zentrum ein Retroreflektor 20 angebracht, während sich an der Innenwand der Bodenplatte 15 ein Interferometer 21 befindet, dessen Licht über ein Prisma 22 in Richtung eines Pfeiles 23 auf den Retroreflektor 20 gerichtet ist, der das Licht dann in Richtung eines Pfeiles 24 zurück zu dem Prisma 22 und dann in das Interferometer 21 wirft. Die Auswertung des durch die Abstandsänderung bewirkten interferometrischen Signals erfolgt in der zuvor beschriebenen, allgemein bekannten Weise.

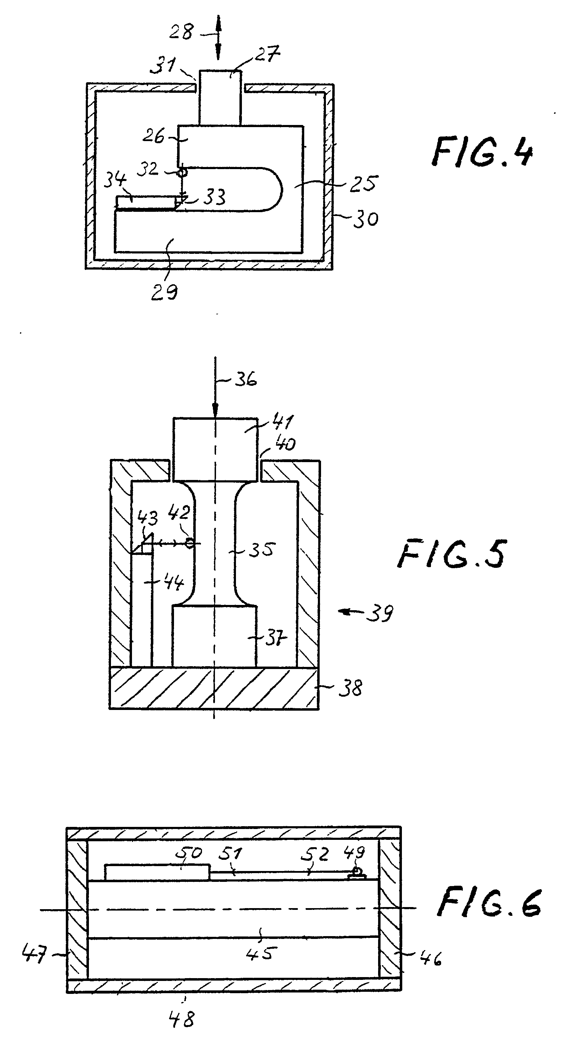

Fig. 4 zeigt ein Ausführungsbeispiel mit einem U-förmigen, deformierbaren Körper 25, dessen oberer Schenkel 26 einen Stempel 27 zur Einleitung einer durch einen Pfeil 28 angedeuteten Kraft versehen ist. Ein unterer Schenkel 29 des deformieren Körpers 25 stützt sich am Boden eines dosenförmigen Gehäuses 30 ab, das eine Öffnung 31 aufweist, durch die der Stempel 27 nach außen ragt.

An dem oberen Schenkel 26 befindet sich ein Retroreflektor 32, während sich gegenüberliegend dazu an dem unteren Schenkel 29 ein umlenkendes Prisma 33 und ein Interferometer 34 befinden.

Durch die Kraft in Richtung des Pfeiles 28 bewegt sich der obere Schenkel 26 etwas nach unten, so daß sich der Retroreflektor 32 dem Prisma 33 nähert, wodurch sich die Lichtstrecke zwischen beiden ändert, die dann durch das Interferometer 34 festgestellt und weiter ausgewertet wird.

Bei dem Ausführungsbeispiel gemäß Fig. 5 ist als deformierbares Teil ein Stab 35 vorgesehen, der in Richtung eines Pfeiles 36 mit der zu messenden Kraft beaufschlagt wird. Ein unteres Ende 37 des Stabes 35 stützt sich auf einer Bodenplatte 38 eines Gehäuses 39 ab, das im oberen Bereich eine Öffnung 40 aufweist, durch die ein oberes Ende 41 des Stabes 35 nach außen ragt.

Seitlich an dem Stab 35 befindet sich ein Retroreflektor 42 und im Abstand seitlich dazu, angebracht an dem Gehäuse 39, ein Prisma 43 mit einem anschließenden Interferometer 44. Bei Kraftbeaufschlagung in Richtung des Pfeiles 36 vergrößert sich der Querschnitt des Stabes 35 im Bereich des Retroreflektors 42, so daß dieser etwas seitlich auswandert und dadurch die Strecke zwischen ihm und dem Prisma 43 und damit den Lichtweg ändert, der dann durch das Interferometer 44 festgestellt wird.

Bei dem Ausführungsbeispiel gemäß Fig. 6 ist der deformierbare Körper durch einen Torsionsstab 45 gebildet, der mit seinen Enden mit Platten 46 und 47 verbunden ist, deren Ränder in einem rohrförmigen Gehäuse 48 stecken.

An dem einen Ende des Torsionsstabes 45 befindet sich ein Retroreflektor 49, während sich entfernt davon am anderen Ende des Torsionsstabes 45 ein Interferometer 50 befindet. Der Lichtweg zwischen dem Retroreflektor 49 und dem Interferometer 50 ist durch Pfeile 51 und 52 angedeutet.

Eine Torsion wird durch die Platten 46 und 47 in den Torsionsstab 45 eingeleitet. Dadurch verändert sich die Drehlage von Retroreflektor 49 in bezug zu dem Interferometer 50, die zu einer Änderung des optischen Weges führt, die durch das Interferometer 50 festgestellt wird.

Bei allen Ausführungsformen der Erfindung kann der Ort von Retroreflektor und Interferometer vertauscht werden.

**Ansprüche**

1. Kraftmesser, mit einem durch eine Kraft elastisch deformierbaren Körper und mit Mitteln zur Messung des durch die Deformation beeinflußten Abstandes zwischen einem Ort des Körpers und einem im Abstand dazu befindlichen weiteren Ort, insbesondere des Körpers, **dadurch gekennzeichnet**, daß die Mittel zur Messung des Abstandes der beiden Orte ein Interferometer (4) aufweisen, das an einem der beiden Orte angeordnet ist, und daß ein das Licht des Interferometers (4) in sich selbst zurückwerfender Retroreflektor an dem anderen der beiden Orte angeordnet ist.

2. Kraftmesser nach Anspruch 1, **dadurch gekennzeichnet**, daß der Retroreflektor eine Kugel (6) ist.

3. Kraftmesser nach Anspruch 1, **dadurch gekennzeichnet**, daß der deformierbare Körper eine von einem Druck beaufschlagte Membran (9) ist, an der der Retroreflektor angebracht ist.

4. Kraftmesser nach Anspruch 1, **dadurch gekennzeichnet**, daß der deformierbare Körper ein einseitig geschlossener, von einem Druck beaufschlagter Balg (13) ist, an dessen vorzugsweise durch eine Platte geschlossenem Ende der Retroreflektor angeordnet ist.

5. Kraftmesser nach Anspruch 1, **dadurch gekennzeichnet**, daß der Balg (13) in einem zylindrischen Raum (3) geführt ist.

6. Kraftmesser nach Anspruch 4 oder 5, **dadurch gekennzeichnet**, daß die Membran (9) und/ oder der Balg (13) in einem im wesentlichen rohrförmigen Körper (1) angeordnet ist.

7. Kraftmesser nach Anspruch 1, **dadurch gekennzeichnet**, daß der deformierbare Körper die Form einer hohlen, vorzugsweise zylindrischen Druckdose (17) bestehend aus einer umlaufenden Seitenwand (16) und sich gegenüberliegenden Deck- (14) und Bodenplatte (15) hat, an denen der Retroreflektor einerseits und das Interferometer (21) andererseits entfernt von der Seitenwandung (16) angeordnet sind.

8. Kraftmesser nach Anspruch 1, **dadurch gekennzeichnet**, daß der deformierbare Körper (25) im wesentlichen U-förmig ist, an dessen Schenkeln (26, 29) der Retroreflektor (32) einerseits und das Interferometer (34) andererseits angeordnet sind.

9. Kraftmesser nach Anspruch 8, **dadurch gekennzeichnet**, daß der U-förmige, deformierbare Körper (25) in einem vorzugsweise dosenförmigen Gehäuse (30) angeordnet ist, wobei einer der Schenkel (26) des U-förmigen Körpers (25) auf der dem anderen Schenkel (29) abgewandten Seite einen Stempel (27) aufweist, der durch das Gehäuse (30) nach außen ragt.

10. Kraftmesser nach Anspruch 1, **dadurch gekennzeichnet**, daß der deformierbare Körper ein durch die zu messende Kraft in Längsrichtung beaufschlagter Stab (35) ist, an dem seit lich der Retroreflektor (42) angeordnet ist, und daß das Interferometer (44) in bezug zu dem Stab seitlich auf den Retroreflektor (42) strahlt.

11. Kraftmesser nach Anspruch 1, **dadurch gekennzeichnet**, daß der deformierbare Körper ein Torsionsstab (45) ist, mit dessen einem Ende das Interferometer (50) verbunden und an dem in Längsrichtung des Torsionsstabes (45) entfernt von dem Interferometer (50) der Retroreflektor (49) angeordnet ist, und daß der Retroreflektor eine Kugel ist, deren Durchmesser größer als der Durchmesser des in allen Torsionslagen auf die Kugel auftreffenden Lichtstrahls aus dem Interferometer ist.

FIG.1

FIG.2

FIG.3

28

31    27

26

34   32

33

25

30

29

**FIG.4**

36

41
40

43  42

35

44

39

37

38

**FIG.5**

50   51      52  49

47                        45                    46

48

**FIG.6**